# EUROPEAN PATENT SPECIFICATION

(11) **EP 4 421 669 B1**
(45) Date of publication and mention of the grant of the patent: **01.10.2025**
(21) Application number: 23158427.7
(22) Date of filing: 24.02.2023
(51) Int. Cl.: G06F 21/62, H04L 9/32, H04L 9/00

(54) **SUBSCRIPTION-BASED MANAGEMENT OF AUTOMATED DRIVING SYSTEM FEATURES**
ABONNEMENTBASIERTE VERWALTUNG VON FUNKTIONEN AUTOMATISIERTER FAHRSYSTEME
GESTION DE CARACTÉRISTIQUES DU SYSTÈME DE CONDUITE AUTOMATISÉE BASÉE SUR UN ABONNEMENT

(43) Date of publication of application: 28.08.2024
(73) Proprietor: Zenseact AB, 417 56 Göteborg (SE)
(72) Inventor: LUVÖ, Thomas, 443 60 Stenkullen (SE)
(74) Representative: Valea AB

(56) References cited:
- WO-A1-2020/139190
- KR-B1- 102 125 042
- PAL SHANTANU ET AL: "On the Integration of Blockchain to the Internet of Things for Enabling Access Right Delegation", IEEE INTERNET OF THINGS JOURNAL, IEEE, USA, vol. 7, no. 4, 7 November 2019 (2019-11-07), pages 2630 - 2639, XP011783753, DOI: 10.1109/JIOT.2019.2952141

## Description

### TECHNICAL FIELD

The present disclosure relates to provision of a subscription service for ADS features.

### BACKGROUND

Within the automotive field, there has for quite some years been activity in development of autonomous vehicles. An increasing number of modern vehicles have advanced driverassistance systems, ADAS, to increase vehicle safety and more generally road safety. ADAS - which for instance may be represented by adaptive cruise control, ACC, collision avoidance system, forward collision warning, etc. - are electronic systems that may aid a vehicle driver while driving. Moreover, in a not-too-distant future, Autonomous Driving, AD, will to greater extent find its way into modern vehicles. AD along with ADAS will herein be referred to under the common term Automated Driving System, ADS, corresponding to all different levels of automation, for instance as defined by the SAE J3016 levels (0 - 5) of driving automation. An ADS may be construed as a complex combination of various components that can be defined as systems where perception, decision making, and operation of the vehicle - at least in part - are performed by electronics and machinery instead of a human driver. This may include handling of the vehicle, destination, as well as awareness of surroundings. While the automated system has control over the vehicle, it allows the human operator to leave all or at least some responsibilities to the system. To perceive its surroundings, an ADS commonly combines a variety of sensors, such as e.g. radar, LIDAR, sonar, camera, navigation and/or positioning system e.g. GNSS such as GPS, odometer and/or inertial measurement units, upon which advanced control systems may interpret sensory information to identify appropriate navigation paths, as well as obstacles and/or relevant signage.

One approach for ADS feature providers - such as ADS features developing companies - to provide ADS-supporting vehicles and/or its operators with ADS features for activation, may be to offer ADS features as services activated through subscriptions. Such subscriptions may for instance support different vehicle configurations and timespans, e.g. from yearly subscriptions to per hour or even per minute activations. Assuming a standard centralized solution where the ADS feature provider controls its feature subscriptions, potential occupants and/or operators of ADS-supporting vehicles - which in this context may be referred to as users, customers and/or end customers - need to communicate with the ADS feature provider and/or a subscription management system e.g. billing B2B company to activate a vehicle ADS feature. The ADS feature provider may then need to interact with the e.g. billing B2B company, which in turn may need to communicate with the OEM that controls the vehicle fleet. Moreover, the OEM may need to communicate with the ADS feature provider to understand the technical aspects of the activation and requirements on the vehicle configuration, and further need to identify the actual vehicle for the requested activation and validate that the vehicle supports that particular feature, taking into consideration potential vehicle updates e.g. done at services. Furthermore, the OEM may then need to relate the customer to the vehicle and further communicate with the ADS feature provider to receive the activation information. Moreover, the ADS feature provider may then bill the customer through the billing company as the OEM sends the activation information to the vehicle. Evidently, it may be a complicated process with many actors and handovers, where the identity of the customer needs to be protected and at the same time shared in order to find the vehicle identity, while fulfilling GDPR and similar regulations. Accordingly, subscription handling of ADS features involving transactions and handovers as described above implicates complexity, potentially along with significant backend and/or transaction costs.

In view thereof, subscription-based activation - and potentially deactivation - of ADS features in a vehicle, may alternatively be realized based on blockchain technology, as e.g. described in European patent application EP 21 201 973.1, by the same inventor and applicant. As disclosed therein, by using a distributed approach and/or mechanism based on smart contracts for handling feature subscription in vehicles, process complexity of the backend and/or transaction costs of subscription handling may be limited and/or decreased while at the same time limiting and/or decreasing number of handovers between potential different parties, such as an ADS feature provider, customer(s) and vehicle fleet OEM, and potentially further a subscription management system such as e.g. a billing B2B company. Moreover, the use of smart contracts in this context may further enable an ADS feature provider to retain control and transparency of the process such as current status and history - which otherwise would have been challenging to collect and maintain - while business and identity aspects of both the customer and of the ADS feature provider may remain protected. That is, as compared to an assumed standard centralized solution, a blockchain-based subscription and potential license handling may be distributed to the vehicles, instead of subscriptions being handled centrally. Such a distributed approach may cover not only the ADS features activation process and potential payment. but also the validation of the vehicle configuration and identification, which - in addition to protecting private information between parties - significantly may decrease the number of handovers and process complexity of negotiating information between parties for activating a subscription in a customer vehicle.

However, although such a blockchain-based subscription-handling solution may enable an efficient process where complexity and/or transactions cost of ADS feature subscription handling may be limited, e.g. as compared to the previously described standard centralized solution(s), there is still room for improvement for blockchain-based subscription management of ADS features. Prior art document KR102125042 B1 discloses a multi-layered blockchain consisting of a public blockchain and a private blockchain, and sorting important data in a private blockchain to enhance security for sensitive data.

### SUMMARY OF THE INVENTION

It is therefore an object of embodiments herein to provide an approach which in an improved and/or alternative manner supports subscription management of ADS features, such as provides an improved and/or alternative subscription service for ADS features.

The object above may be achieved by the subject-matter disclosed herein. Embodiments are set forth in the appended claims, in the following description and in the drawings.

The disclosed subject-matter relates to a method performed by a subscription management system for provision of a subscription service for ADS features. The subscription management system deploys on a private blockchain network comprising a set of nodes, a smart contract identifying data indicative of a user being eligible for one or more subscription options representing various ADS feature sets, the user-indicative data comprising a respective unique private key and public key personal to the user. The subscription management system further deploys, on a public blockchain network supporting minting of NFTs - and for instance comprising at least one of said set of nodes - a smart contract generating a whitelisting request transaction comprising the unique private and public keys. The subscription management system further deploys a smart contract adding the whitelisting request transaction to the public blockchain, the addition whitelisting the unique public key for minting of NFTs on the public blockchain network. Moreover, the subscription management system deploys on the public blockchain network, a smart contract identifying data indicative of said public key having been included in minting of an NFT on the public blockchain, which NFT comprises and/or points to data indicative of an at least first subscription option out of the one or more subscription options and further comprises a unique address associated with the user derived from the unique public key. The management subscription system further deploys on the private blockchain network, a smart contract generating a subscription activation transaction comprising data indicative of the unique address and comprising and/or pointing to the at least first subscription option. Furthermore, the subscription management system deploys a smart contract adding the subscription activation transaction to the private blockchain, the addition whitelisting activation of the ADS feature set of the at least first subscription option.

The disclosed subject-matter further relates to a subscription management system forand/or adapted and/or configured for - provision of a subscription service for ADS features. The subscription management system comprises a user eligibility identifying unit for - and/or adapted and/or configured for - deploying on a private blockchain network comprising a set of nodes, a smart contract identifying data indicative of a user being eligible for one or more subscription options representing various ADS feature sets, which user-indicative data comprises a respective unique private key and public key personal to the user. The subscription management system further comprises a whitelist transaction generating unit for - and/or adapted and/or configured for - deploying on a public blockchain network supporting minting of NFTs - and for instance comprising at least one of said set of nodes - a smart contract generating a whitelisting request transaction comprising the unique private and public keys. Furthermore, the subscription management system comprises a whitelist transaction adding unit for - and/or adapted and/or configured for - deploying a smart contract adding the whitelisting request transaction to the public blockchain, the addition whitelisting the unique public key for minting of NFTs on the public blockchain network. Moreover, the subscription management system comprises an NFT identifying unit for - and/or adapted and/or configured for - deploying on the public blockchain network, a smart contract identifying data indicative of the public key having been included in minting of an NFT on the public blockchain, which NFT comprises and/or points to data indicative of an at least first subscription option out of the one or more subscription options and further comprises a unique address associated with the user derived from the unique public key. The subscription management system further comprises a subscription transaction generating unit for - and/or adapted and/or configured for - deploying on the private blockchain network, a smart contract generating a subscription activation transaction comprising data indicative of the unique address and comprising and/or pointing to the at least first subscription option. Moreover, the subscription management system comprises a subscription transaction adding unit for - and/or adapted and/or configured for - deploying a smart contract adding the subscription activation transaction to the private blockchain, the addition whitelisting activation of the ADS feature set of the at least first subscription option.

Furthermore, the disclosed subject-matter relates to at least a first node comprising a subscription management system described herein.

Moreover, the disclosed subject-matter relates to a computer program product comprising a computer program containing computer program code means arranged to cause a computer or a processor to execute the steps of a subscription management system described herein, stored on a computer-readable medium or a carrier wave.

The disclosed subject-matter further relates to a non-volatile computer readable storage medium having stored thereon said computer program product.

Thereby, there is introduced an approach enabling community-based subscription handling of ADS features. That is, since there is deployed on a private blockchain network comprising a set of nodes, a smart contract identifying data indicative of a user being eligible for one or more subscription options representing various ADS feature sets, which user-indicative data comprises a respective unique private key and public key personal to the user, there is identified on a private blockchain to which plural nodes - e.g. at least a service provider node and/or a subscription-bundling node - are connected, an event reflecting that a user, such as e.g. a vehicle owner, assigned a respective unique private key and public key, is deemed permitted - for instance following funding e.g. by a credit card and/or blockchain wallet being registered related to said user - to subscribe to one or more subscriptions of various ADS features and/or feature constellations, e.g. as bundled by an OEM. Accordingly, with support from one or more blockchain-stored smart contracts on the private network, e.g. deployed via the exemplifying service provider node(s), there is identified and made known on the private blockchain of a user assigned - e.g. via the exemplifying subscription-bundling node(s) - unique private and public keys derivable from the user-indicative data, which user is deemed legitimate for signing up for ADS feature(s) subscription(s). Furthermore, that is, since there is deployed on a public blockchain network supporting minting of NFTs - and for instance comprising at least one of said set of nodes - a smart contract generating a whitelisting request transaction comprising the unique private and public keys, there is submitted on a public blockchain supporting, offering and/or comprising a community and/or market place, and to which one or more nodes out of the set of nodes - e.g. the exemplifying service provider node(s) and/or subscription-bundling node(s) - may be connected, an entry comprising the same user-associated keys as used in the private domain and representing a request for whitelisting of the user in the public domain. Accordingly, with support from one or more blockchain-stored smart contracts - e.g. deployed via the exemplifying service provider node(s) - there is requested on the NFT-supporting public blockchain - in an entry in which there is embedded at least the unique respective private key and public key associated with the user - permission for the public key - and subsequently for said user - to be approved by, be a party of and/or act on the public blockchain network. Moreover, that is, since there is deployed a smart contract adding the whitelisting request transaction to the public blockchain, which addition whitelists the unique public key for minting of NFTs on the public blockchain network, there is logged to the public blockchain networke.g. following consensus of the whitelisting request transaction being reached on the network - the whitelisting request transaction, whereby the unique public key associated with the user - and/or a unique address derived and/or hashed from the unique public key - is provided approval rights for minting of NFTs on the public blockchain network. Accordingly, by the whitelisting request transaction with support from one or more smart contracts being added to the network - for instance provided that content of the whitelisting request transaction is found to comply with requirements and/or conditions stipulated in said smart contract(s) - the unique public key - and subsequently the user - is thus given a right to participate in the NFT-supporting public blockchain network, such as acting e.g. minting in the community and/or market place thereof, e.g. in relation to one or more subscription options. Furthermore, that is, since there is deployed on the public blockchain network, a smart contract identifying data indicative of the public key having been included in minting of an NFT on the public blockchain, which NFT comprises and/or points to data indicative of an at least first subscription option out of the one or more subscription options and further comprises a unique address associated with the user derived from the unique public key, there is identified on the NFT-supporting public blockchain network, an event reflecting that an NFT has been minted on the public blockchain, which NFT is connected to and/or associated with the unique public key of said user, and which NFT holds and/or indicates information of a - from the public key hashed and/or derived - unique address and further of one or more subscription options. Accordingly, with support from one or more blockchain-stored smart contracts on the public network, e.g. deployed via the exemplifying subscription-bundling node(s), there is learned that there has been created and/or called - for instance by the user - a mint function on the public blockchain creating an NFT indicating that the unique public key - or a unique address hashed therefrom - is associated with and/or owns said NFT, and further indicating one or more pinpointed subscription options. Subsequently, by identifying that there has occurred a minting of the user-owned NFT on the NFT-supporting blockchain, there may be acknowledged that one or more ADS subscription options identifiable in the NFT, have been selected, such as to be subscribed to by the user. Moreover, that is, since there is deployed on the private blockchain network, a smart contract generating a subscription activation transaction comprising data indicative of the unique address and comprising and/or pointing to the at least first subscription option, there is submitted in the private domain- e.g. via the exemplifying subscription-bundling node(s) - an entry holding and/or embedding data revealing the unique address associated with the user in the public domain, and comprising and/or pointing to the selected one or more subscription options. Furthermore, since there is deployed a smart contract adding the subscription activation transaction to the private blockchain, which addition whitelists activation of the ADS feature set of the at least first subscription option, there is logged to the private blockchain network - e.g. following consensus of the subscription activation transaction being reached on the network - the subscription activation transaction, whereby information of the unique address and further of the selected subscription option(s) is made available on and/or via the private network, subsequently providing approval rights for activation and/or handling of ADS features set(s) of said subscription option(s). Accordingly, by the subscription activation transaction with support from one or more smart contracts being added to the network - for instance provided that content of the subscription activation transaction is found to comply with requirements and/or conditions stipulated in said smart contract(s) - the unique address - or an owner thereof or of the NFT associated therewith - is thus enabled activation of one or more ADS features covered by the one or more subscription options identifiable in the subscription activation transaction. This in turn may enable for and/or support subsequent interaction on the private blockchain between the user - and/or the owner of the unique address - and an ADS-equipped vehicle on the private blockchain network supporting the ADS features covered by the at least first subscription option, for activation and/or handling of the at least first subscription and/or the ADS feature set associated therewith, such as without further involvement of e.g. an ADS feature provider and/or subscriptions bundling provider e.g. OEM.

For that reason, an approach is provided for in an improved and/or alternative manner support subscription management of ADS features, such as provided an improved and/or alternative subscription service for ADS features.

In other words, with the approach and/or setup introduced herein, private data related to e.g. internal workings of available and/or supported ADS features, potential validation information, detailed subscription information and/or business intelligence etc., may be handled on a private blockchain - e.g. between participants such as an ADS feature provider and subscriptions bundling provider e.g. OEM - while at the same time subscriptions of ADS features may be handled on an NFT-supporting public blockchain network providing the ability of minting subscriptions as NFTs. Thereby, privacy requirements and/or needs may be met while at the same time subscription handling may be offered in, to and/or at a public community and/or market place of an NFT-supporting network. That is, ownership of subscriptions may be handled via a public domain, while e.g. configuration and/or status thereof may be handled via a private domain. Thus, with the introduced concept involving community-based subscription management and providing an approach for connecting both private and public domains as discussed herein, toggling of ADS features may be supported and/or enabled in an efficient and/or improved manner.

The technical features and corresponding advantages of the above-mentioned method will be discussed in further detail in the following.

### BRIEF DESCRIPTION OF THE DRAWINGS

The various aspects of the non-limiting embodiments, including particular features and advantages, will be readily understood from the following detailed description and the accompanying drawings, in which:
**Fig. 1** illustrates a schematic view of an exemplifying subscription management system according to embodiments of the disclosure;
**Fig. 2** is a schematic block diagram illustrating an exemplifying subscription management system according to embodiments of the disclosure; and
**Fig. 3** is a flowchart depicting an exemplifying method performed by a subscription management system according to embodiments of the disclosure.

### DETAILED DESCRIPTION

Non-limiting embodiments of the present disclosure will now be described more fully hereinafter with reference to the accompanying drawings, in which currently preferred embodiments of the disclosure are shown. This disclosure may, however, be embodied in many different forms and should not be construed as limited to the embodiments set forth herein. Like reference characters refer to like elements throughout. Dashed lines of some boxes in the figures indicate that these units or actions are optional and not mandatory.

In the following, according to embodiments herein which relate to provision of a subscription service for ADS features, there will be disclosed an approach enabling community-based subscription handling of ADS features.

In general, smart contract(s) described throughout this disclosure, may follow general principles of smart contracts on blockchains as known in the art - which may involve programs and/or program code stored on a blockchain that for instance may run when predeterminable conditions are met, automate actions, and/or trigger next actions when conditions are met - however herein configured to control, trigger and/or assist in providing a subscription service for - and/or supporting subscription management of - ADS features. Throughout, a smart contract may for instance be activated upon reception of data from which a transaction is to be based, following which such a transaction - e.g. along with data generated from the smart contract - may be added to the blockchain. Addition of a transaction may - as known in the art - for instance be preceded by consensus having had to been reached on the blockchain prior to the addition. Consensus may be reached in any feasible - e.g. known - manner, such as based on a proof-of-stake approach for instance using consensus algorithm(s) which all - or essentially all - blockchain network nodes may have the ability to run. For instance, a prerequisite for reaching consensus may involve network-connected nodes - such as a majority thereof and/or to an extent stipulated by a proof-of-stake approach - respectively finding a transaction legitimate, eligible and/or allowed. Throughout the disclosure, "a smart contract" may refer to one or more common and/or various smart contracts, and further, according to an example, to "chaincode".

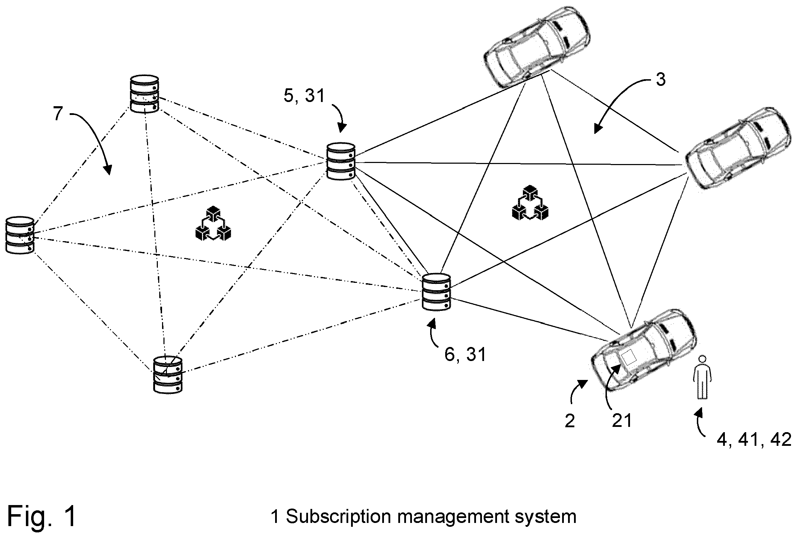

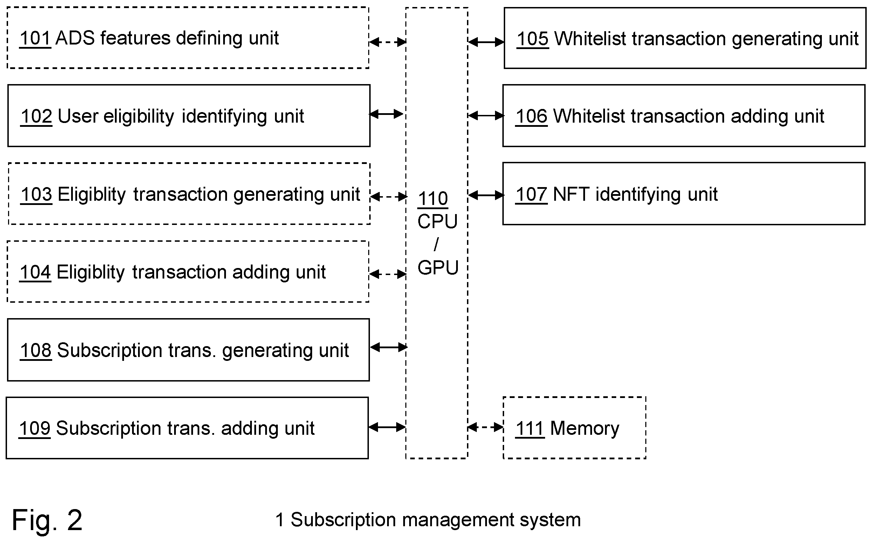

Referring now to the figures, there is depicted in **Fig. 1** a schematic view - and in **Fig. 2** a schematic block diagram - of an exemplifying **subscription management system 1** according to embodiments of the disclosure. The subscription management system 1 is adapted and/or configured for provision of a subscription service for ADS features, such as for ADS features applicable in and/or for ADS-supporting and/or ADS-equipped **vehicles 2.** Exemplifying vehicle(s) 2 supporting one or more ADS features may be represented by any arbitrary - e.g. known - manned or unmanned respective vehicle, for instance an engine-propelled and/or electrically-powered vehicle such as a car, truck, lorry, van, bus and/or tractor. Moreover, the term "vehicle" may refer to "autonomous and/or at least partly autonomous vehicle", "driverless and/or at least partly driverless vehicle", and/or "self-driving and/or at least partly self-driving vehicle", and according to an example further to "production vehicle" and/or "fleet vehicle". Respective exemplifying vehicle 2 may thus be provided with an **ADS 21,** which ADS 21 may be represented by any arbitrary ADAS or AD system e.g. known in the art and/or yet to be developed. An ADS feature referred to herein may accordingly be represented by any arbitrary - e.g. known - ADS feature, such as any feature controlling a vehicle's movement. According to an example, such an ADS feature may thus be represented by e.g. lane control, cruise control, parking assistance, etc. Moreover, the phrase "subscription management system" may refer to "subscription-handling system", "multi-chain subscription management system", "ADS features subscription management system", "domain-distributed system" and/or "distribution-based system", whereas "method performed by a subscription management system" may refer to "at least partly computer-implemented method performed by a subscription management system". The phase "for provision of a subscription service for ADS features", on the other hand, may refer to "for provision of a subscription service for vehicle ADS features", "for supporting management and/or handling of subscriptions enabling and/or governing activation and/or handling of ADS features", "for supporting management and/or handling of subscriptions enabling and/or governing activation and/or handling of ADS features in a vehicle" and/or "for supporting distributed management and/or handling of subscriptions enabling and/or governing activation and/or handling of ADS features", and according to an example further to "for provision of a subscription service for ADS features utilizing both a private and public domain".

As illustrated in an exemplifying manner in exemplifying Figs. 1 and 2, the subscription management system 1 is - e.g. by means of a **user eligibility identifying unit 102** - adapted and/or configured for deploying on a **private blockchain network 3** comprising a **set of nodes 31,** a smart contract identifying data indicative of a **user 4** being eligible for one or more subscription options representing various ADS feature sets, which user-indicative data comprises a respective unique **private key 41** and **public key 42** personal to the user 4. Thereby, there is identified on a private blockchain network 3 to which plural nodes 31 - e.g. at least a **service provider node 5** and/or a **subscription-bundling node 6** - are connected, an event reflecting that a user 4, such as e.g. a vehicle owner, assigned a respective unique private key 41 and public key 42, is deemed permitted - for instance following funding e.g. by a credit card and/or blockchain wallet being registered related to said user 4 - to subscribe to one or more subscriptions of various ADS features and/or feature constellations, e.g. as bundled by an OEM. Accordingly, with support from one or more blockchain-stored smart contracts on the private network 3 - e.g. deployed via the exemplifying service provider node(s) 5 - there is identified and made known on the private blockchain 3 of a user 4 assigned - e.g. via said exemplifying subscription-bundling node(s) 6 - unique private and public keys 41, 42 derivable from the user-indicative data, which user 4 is deemed legitimate for signing up for ADS feature(s) subscription(s).

The data indicative of the user 4 being eligible for one or more subscription options, may be of any feasible format. Furthermore, deploying on a private blockchain network 3 a smart contract identifying data indicative of a user 4 being eligible for one or more subscription options - representing various ADS feature sets - may be accomplished in any feasible manner, such as by any party and/or node 31, 2 on the private network 3. The private blockchain network 3 - to which nodes may be added and/or be removed from over time - may be represented by any arbitrary feasible blockchain network e.g. a peer-to-peer blockchain network, for instance known in the art, and comprise any feasible nodes 31 - such as service provider node(s) 5 and/or subscription-bundling nodes(s) 6 - as well as other nodes such as e.g. computational nodes, and similarly any arbitrary number of ADS-equipped vehicles 2 and/or nodes associated therewith. Accordingly, nodes 31, 2 - for instance including ADS-supporting vehicles 2 such as customer vehicles 2 e.g. a fleet of vehicles 2 for instance associated with and/or belonging to the same OEM - may be connected into a virtual network 3, sharing a blockchain supporting smart contracts through which said nodes 31, 2 may interact. ADS-supporting vehicles 2 potentially comprised in the private blockchain network 3, may potentially have and/or be assigned own respective unique private and public keys and/or blockchain wallets. Similarly, the exemplifying service provider node(s) 5 and subscription-bundling node(s) 6, may have respective validators on the private blockchain 3. Throughout the disclosure, unique private and public keys as referred to herein, may refer to blockchain-related unique private and public keys generated and/or defined as known in the art. The set of nodes 31 on the private network 3 may comprise any arbitrary number and/or constellation of nodes. Optionally, however, and as indicated above, said set of nodes 31 may comprise at least a service provider node 5 - e.g. at least a first service provider node - dedicated to an ADS feature provider, and/or a subscriptions-bundling node 6 - e.g. at least a first subscription-bundling node - dedicated to a subscriptions bundling provider such as an OEM. Thereby, parties relevant and/or of interest in the subscription process of ADS features, may act and/or be participants of the private network 3, by being associated with and/or controlling nodes 5, 6 thereof. Accordingly, the smart contract - which may be represented by any feasible one or more smart contracts configured to identify data indicative of a user 4 being eligible for one or more subscription options representing various ADS feature sets - may for instance be deployed via the exemplifying service provider node(s) 5. Moreover, the user 4 may refer to any person and/or customer, and may optionally be associated with - e.g. own, lease, share, be assigned a right to use, etc. - an ADS-equipped vehicle 2 connected to the private blockchain network 3. Thereby, the user 4 may have a connection to a vehicle 2 participating in the private blockchain network 3, which vehicle 2 supports one or more ADS features to which one may potentially subscribe. According to an example, "deploying [...] a smart contract identifying data indicative of a user" may refer to "identifying [...] with support from a smart contract data indicative of a user" and/or merely "identifying [...] data indicative of a user", whereas "on a private blockchain network" may refer to "on a blockchain consortium network", "on a peer-to-peer, virtual and/or permissioned blockchain network" and/or "on a private distributed ledger technology, DLT, network". Furthermore, the phrase "private blockchain network comprising a set of nodes" may according to an example refer to "private blockchain network comprising a set of smart contracts". The phrase "data indicative of a user being eligible", on the other hand, may refer to "data holding and/or revealing a user being eligible" and/or merely "a user being eligible". Moreover, "respective unique private key and public key personal to said user" may refer to "respective unique private key and public key associated with and/or unique to said user", and according to an example further to "wallet on the blockchain personal to said user". Moreover, "user being eligible for one or more subscription options [...]" may refer to "a user being eligible for signing up for one or more subscription options". The phrase "representing various ADS feature sets", on the other hand, may refer to "indicating various ADS feature sets", whereas "ADS feature sets" may refer to "ADS feature sets available for and/or offered for activation and/or handling".

Respective subscription option - which for instance may be bundled by an OEM - may comprise respective subscription time constraints - and/or data indicative of subscription time constraints - which may be of any arbitrary feasible temporal dimensions, for instance relating to a subscription start time, duration and/or end time, such as limiting a subscription to start and/or end at predeterminable point in time and/or have a predeterminable subscription period. Furthermore, according to an example, respective subscription option may further comprise respective subscription cost - and/or data indicative of subscription cost - associated with respective subscription option. Such a potential subscription cost may be of any arbitrary feasible amount, for instance associated with blockchain credits, and may further include zero and/or be empty, i.e. signaling no cost. Furthermore, the subscription options may be represented by any arbitrary number of options, e.g. ranging from a single subscription option up to numerous thereof, and may potentially further respectively be restricted to specific geographical areas. The in respective subscription option indicated ADS feature set - which may be available for activation - may comprise any arbitrary feasible one or more ADS features in any feasible combination, e.g. ranging from a single ADS feature up to numerous thereof. Furthermore, there may in respective subscription option be indicated required ADS-related vehicle configuration pertinent the corresponding ADS feature set, which may be represented by any feasible vehicle configurations relevant in view of said corresponding ADS feature set and/or a therewith associated ADS 21, for instance relating to hardware and/or software - and/or dynamic and/or static - vehicle configurations, such as required ADS-related and/or ADS-relevant equipment and/or sensors such as e.g. surrounding detecting sensors, supported ADS software versions, supported country registration, etc.

That is, for an ADS feature to be able - and/or allowed - to be activated in a vehicle, said vehicle need to comply with various prerequisites, such as for instance comprising specific functioning sensor sets and/or equipment, running a certain ADS software version, being registered in a country in which activation is allowable etc., all of which may be representing the ADS-related vehicle configuration(s).

Which ADS features and corresponding required ADS-related vehicle configuration that are supported - and subsequently may be available for bundling into differing subscription options - may be stored in, embedded in, coded into, derivable from and/or available through any feasible source e.g. a digital source such as a table, matrix and/or database, e.g. updated periodically and/or as deemed relevant, for instance provided and/or updated by an ADS features provider e.g. via the exemplifying service provider node(s) 5. In accordance therewith, data revealing one or more ADS features available and/or supported for activation - and corresponding required vehicle configurations relevant therefor such as required ADS-related sensors and/or equipment, supported ADS software versions and/or supported country registrations etc. - may subsequently form basis for one or more subscription alternatives. Optionally - for instance prior to there being deployed on the private blockchain network 3 a smart contract identifying data indicative of a user 4 being eligible for one or more subscription options representing various ADS feature sets - the subscription management system 1 may - e.g. by means of an optional **ADS features identifying unit 101** - be adapted and/or configured for deploying a smart contract on the private blockchain network 3, defining available ADS features and corresponding required ADS-related vehicle configurations. Thereby, available, possible and/or supported ADS features and corresponding required ADS-related vehicle configurations, may be handled, provided, stored and/or coded - such as via the exemplifying service provider node(s) 5 - in one or more smart contracts, and subsequently be made available on and/or derivable from the private blockchain network 3 for subsequent bundling into differing ADS features subscription options. According to an example, the subscription option(s) bundled therefrom and thus available and/or offered for subscription, may in a similar manner potentially be stored in, embedded in, coded into, derivable from and/or available through any feasible source e.g. a digital source such as a table, matrix and/or database available from the private blockchain network 3 - and/or in a smart contract such as coded onto the private blockchain 3 - e.g. updated periodically and/or as deemed relevant, for instance via the exemplifying subscription-bundling node(s) 6.

In association with identifying data indicative of a user 4 being eligible for one or more subscription options representing various ADS feature sets and which user-indicative data comprises a respective unique private key 41 and public key 42 personal to the user 4 - as described above - the subscription management system 1 may further optionally - e.g. by means of an optional **eligibility transaction generating unit 103** - be adapted and/or configured for deploying on the private blockchain network 3, a smart contract generating a user eligibility transaction comprising data indicative of the unique private and public keys 41, 42, and further - e.g. by means of an optional **eligibility transaction adding unit 104** - be adapted and/or configured for deploying a smart contract adding the user eligibility transaction to the private blockchain 3, the addition whitelisting the user 4 for monetary transfer(s) of tokens on the private blockchain 3 for ADS feature set(s) activation. Thereby, there is with support from one or more blockchain-stored smart contracts, submitted on the private blockchain network 3 - e.g. via the exemplifying service provider node(s) 5 - an entry holding data revealing the unique private and public keys 41, 42 associated with the eligible user 4, which entry is logged to the private blockchain network 3 - e.g. following consensus of the user eligibility transaction being reached on said network 3 - following which the user 4 is given approval rights for monetary activity on the private blockchain 3 in terms of ADS feature(s) activation and/or handling. Deploying on the private blockchain network 3 a smart contract generating such a user eligibility transaction, may be accomplished in any feasible manner, such as by any party and/or node on the private network 3, for instance via the exemplifying service provider node(s) 5 and/or subscription-bundling node(s) 6. The smart contract generating a user eligibility transaction may be represented by any feasible one or more smart contracts configured to generate a user eligibility transaction comprising the unique private and public keys 41, 42. Similarly, the smart contract(s) adding the user eligibility transaction to the private blockchain 3 - and which e.g. may be activated upon the user eligibility transaction being sent and/or provided as input thereto - may be configured in any feasible manner for adding the user eligibility transaction to the private blockchain 3 and whitelisting the user 4 for monetary transfer(s) of tokens on the private blockchain 3 for ADS feature set(s) activation. According to an example, "deploying [..] a smart contract generating a user eligibility transaction" may refer to "generating [...] with support from a smart contract a user eligibility transaction", whereas "user eligibility transaction" may refer to "user eligibility record, entry and/or data" and/ or merely "transaction". Similarly, according to an example, "deploying [..] a smart contract adding the user eligibility transaction to the private blockchain" may refer to "adding [...] with support from a smart contract the user eligibility transaction to the private blockchain", whereas "the addition whitelisting said user for monetary transfer(s) of tokens on said private blockchain for ADS feature set(s) activation" may refer to "the smart contract whitelisting said user for monetary transfer(s) of tokens on said private blockchain for ADS feature set(s) activation" and/or "the addition providing, rendering and/or giving approval rights to said user for monetary transfer(s) of tokens on said private blockchain for ADS feature set(s) activation".

As illustrated in an exemplifying manner in exemplifying Figs. 1 and 2, the subscription management system 1 is further - e.g. by means of a **whitelist transaction generating unit 105** - adapted and/or configured for deploying on a **public blockchain network 7** supporting minting of NFTs - and for instance comprising at least one of said set of nodes 31 - a smart contract generating a whitelisting request transaction comprising said unique private and public keys 41, 42. Thereby, there is submitted on a public blockchain network 7 supporting, offering and/or comprising a community and/or market place, and to which one or more nodes out of the set of nodes 31 - e.g. the exemplifying service provider node(s) 5 and/or subscription-bundling node(s) 6 - may be connected, an entry comprising the same user-associated keys 41, 42 as used in the private domain 3 and representing a request for whitelisting of said user 4 in the public domain 7. Accordingly, with support from one or more blockchain-stored smart contracts - e.g. deployed via the exemplifying service provider node(s) 5 - there is requested on the NFT-supporting public blockchain 7 - in an entry in which there is embedded at least the unique respective private key 41 and public key 42 associated with said user 4 - permission for the public key 42 - and subsequently for said user 4 - to be approved by, be a party of and/or act on the public blockchain network 7.

With this approach and/or setup, the user 4 may for instance be anonymous in the public domain 7, while known - e.g. tied via a credit card - in the private domain 3.The public blockchain network 7 - to which nodes may be added and/or be removed from over time - may comprise any arbitrary number and/or constellation of nodes, and may further be represented by any arbitrary feasible public blockchain network supporting minting of NFTs in any feasible - e.g. known - manner, such as public blockchain network supporting, offering and/or comprising a community and/or market place, such as for instance commonly known OpenSea. In accordance therewith, nodes - e.g. including one or more nodes of the set of nodes 31 also comprised in the private blockchain network 3 - may be connected into a virtual network 7, sharing a blockchain supporting smart contracts through which said nodes may interact in a form of community and/or market place. Minting of NFTs referred to herein may be accomplished in any feasible manner such as based on minting of NFTs as known in the art, e.g. as provided and/or supported by exemplifying OpenSea. Similarly, deploying on a public blockchain network 7 supporting minting of NFTs - and e.g. comprising at least one of said set of nodes 31 - a smart contract generating a whitelisting request transaction comprising the unique private and public keys 41, 42, may be accomplished in any feasible - e.g. known - manner, such as by any party and/or node on the public network 7, for instance via the exemplifying service provider node(s) 5 and/or via the exemplifying subscription-bundling node(s) 6. The smart contract may be represented by any feasible one or more smart contracts configured to generate a whitelisting request transaction comprising the unique private and public keys 41, 42. Upon generating the whitelisting request transaction, the private key 41 may potentially be used for signing of said transaction, as known in the art. Moreover, generating of a whitelisting request transaction may occur at any arbitrary feasible time instant following data having been identified on the private blockchain network 3 indicative of the user 4 in question being eligible, such as essentially instantly thereafter, a predeterminable time thereafter and/or when circumstances - e.g. compute resources - so allow. According to an example, "deploying [..] a smart contract generating a whitelisting request transaction" may refer to "generating [...] with support from a smart contract a whitelisting request transaction", whereas "whitelisting request transaction" may refer to "whitelisting request record, entry and/or data", "transaction representing a request for whitelisting and/or approval of said user" and/ or merely "transaction". Moreover, "a public blockchain network" may according to an example refer to "a public distributed ledger technology, DLT, network". Furthermore, according to an example, the whitelisting request transaction may further comprise data indicative of and/or specifying one or more subscription option out of the set of subscription options, e.g. at least a first subscription option for which said user 4 is and/or may be eligible.

As illustrated in an exemplifying manner in exemplifying Figs. 1 and 2, the subscription management system 1 is further - e.g. by means of a **whitelist transaction adding unit 106** - adapted and/or configured for deploying a smart contract adding the whitelisting request transaction to the public blockchain 7, which addition whitelists the unique public key 42 for minting of NFTs on the public blockchain network 7. Thereby, the whitelisting request transaction is logged to the public blockchain network 7 - e.g. following consensus of the whitelisting request transaction being reached on said network 7 - whereby the unique public key 42 associated with said user 4 - and/or a unique address derived and/or hashed from said unique public key 42 - is provided approval rights for minting of NFTs on the public blockchain network 7. Accordingly, by the whitelisting request transaction with support from one or more smart contracts being added to the network 7 - for instance provided that content of the whitelisting request transaction is found to comply with requirements and/or conditions stipulated in said smart contract(s) - the unique public key 42 - and subsequently the user 4 - is thus given a right to participate in the NFT-supporting public blockchain network 7, such as acting e.g. minting in the community and/or market place thereof, e.g. in relation to one or more subscription options.

The smart contract(s) adding the whitelisting request transaction to the public blockchain 7 - and which e.g. may be activated upon the whitelisting request transaction being sent and/or provided as input thereto - may be configured in any feasible manner for adding the whitelisting request transaction to the public blockchain 7 and whitelisting the unique public key 42 for minting of NFTs on the public blockchain network 7. Moreover, the user 4 may be represented by and/or identified on the NFT-supporting public network 7 by his/her unique public key 42, and/or a unique address derived and/or hashed therefrom. According to an example, "deploying [..] a smart contract adding the whitelisting request transaction to the public blockchain" may refer to "adding [...] with support from a smart contract the whitelisting request transaction to the public blockchain", whereas "the addition whitelisting said public key for minting NFTs" may refer to "the smart contract whitelisting said public key for minting NFTs", "the addition providing, rendering and/or giving approval rights to said public key to mint NFTs", "the addition enabling said unique public key to mint NFTs" and/or "the addition whitelisting said public key for minting of subscription-related NFTs". Moreover, "whitelisting said unique public key" may according to an example refer to "whitelisting said unique public key and/or a unique address derived and/or hashed from said unique public key".

As illustrated in an exemplifying manner in exemplifying Figs. 1 and 2, the subscription management system 1 is further - e.g. by means of an **NFT identifying unit 107** - adapted and/or configured for deploying on the public blockchain network 7, a smart contract identifying data indicative of the public key 42 having been included in minting of an NFT on the public blockchain 7, which NFT comprises and/or points to data indicative of an at least first subscription option out of the one or more subscription options and further comprises a unique address associated with the user 4 derived from the unique public key 42. Thereby, there is identified on the NFT-supporting public blockchain network 7, an event reflecting that an NFT has been minted on the public blockchain 7, which NFT is connected to and/or associated with the unique public key 42 of the user 4, and which NFT holds and/or indicates information of a - from said public key 42 hashed and/or derived - unique address and further of one or more subscription options. Accordingly, with support from one or more blockchain-stored smart contracts on the public network 7 - e.g. deployed via the exemplifying subscription-bundling node(s) 6 - there is learned that there has been created and/or called - for instance by said user 4 - a mint function on the public blockchain 7 creating an NFT indicating that the unique public key 42 - or a unique address hashed therefrom - is associated with and/or owns said NFT, and further indicating one or more pinpointed subscription options. Subsequently, by identifying that there has occurred a minting of said user-owned NFT on the NFT-supporting blockchain 7, there may be acknowledged that one or more ADS subscription options identifiable in the NFT, have been selected, such as to be subscribed to by said user 4.

Deploying on the public blockchain network 7 a smart contract identifying data indicative of the public key 42 having been included in minting of an NFT on the public blockchain 7, may be accomplished in any feasible manner, such as by any party and/or node on said public network 7, e.g. via the exemplifying subscription-bundling node(s) 6 and/or service provider node(s) 5. Moreover, the unique address associated with the user 4, may be derived from the unique public key 42 personal to the user 4 in any feasible - e.g. known - manner, such as being hashed therefrom. Furthermore, the at least first subscription option may refer to any one, two or more subscription options out of the one or more subscription options respectively representing differing ADS feature sets. The subscription option(s) may for instance be - and/or have been - selected by the user 4 prior to and/or connection with minting the NFT. The subscription option(s) available and/or offered for subscription, may for instance be stored in, embedded in, coded into, derivable from and/or available through any feasible source e.g. a digital source such as a table, matrix and/or database available from the public blockchain network 7 e.g. updated periodically and/or as deemed relevant, for instance via the exemplifying subscription-bundling node(s) 6 and/or service provider node(s) 5. Optionally, however, the one or more subscription options and corresponding required ADS-related vehicle configurations may be derivable from a smart contract deployed on the public blockchain network 7. Thereby, available and/or offered subscription options may be defined in one or more smart contracts on the public blockchain 7, e.g. via the exemplifying subscription-bundling node(s) 6 and/or service provider node(s) 5. In such a manner, the various available subscription options may be updated and/or retrievable in a convenient manner. Additionally or alternatively, the subscription option(s) may have been defined and/or selected in connection with the user 4 being deemed eligible for subscriptions e.g. following the potential funding e.g. by a credit card and/or blockchain wallet being registered related to said user 4, as previously described. According to an example, "deploying [...] a smart contract identifying data indicative of said public key having been included in minting of an NFT" may refer to "identifying [...] with support from a smart contract data indicative of said public key having been included in minting of an NFT", "deploying [...] a smart contract identifying data indicative of said public key having been comprised, embedded and/or involved in minting of an NFT" and/or "deploying [...] a smart contract identifying data indicative of that said public key has been included in minting of an NFT", whereas "data indicative of said public key having been included in minting of an NFT" may refer to "data holding and/or revealing said public key having been included in minting of an NFT". In a similar manner, "data indicative of at least a first subscription option" may refer to "data holding and/or revealing at least a first subscription option", whereas "data indicative of an at least first subscription option" may refer to "data indicative of at least a first selected subscription option". Moreover, "comprising a unique address associated with the user" may refer to "comprising data indicative of a unique address associated with the user", whereas "comprising a unique address associated with the user derived from said unique public key" may refer to merely "comprising a unique address derived from said unique public key" and according to an example further to merely "comprising and/or pointing to said unique public key". Furthermore, according to an example, the user-owned NFT may as an alternative to being selected for subscription to be used by the user 4, be made available and/or offered in the community and/or marketplace of the NFT-supporting blockchain 7, such as put up for e.g. sale, lease, hire and/or trade. Thus, a subscription need not necessarily be tied to a specific ADS-equipped vehicle 2 associated with a specific user 4, but may potentially be activated in any private blockchain-connected vehicle 2 supporting the ADS features associated with said subscription.

As illustrated in an exemplifying manner in exemplifying Figs. 1 and 2, the subscription management system 1 is further - e.g. by means of a **subscription transaction generating unit 108** - adapted and/or configured for deploying on the private blockchain network 3, a smart contract generating a subscription activation transaction comprising data indicative of the unique address and comprising and/or pointing to said at least first subscription option. Thereby, there is submitted in the private domain 3 - e.g. via the exemplifying subscription-bundling node(s) 6 - an entry holding and/or embedding data revealing the unique address associated with the user 4 in the public domain 7, and comprising and/or pointing to the selected one or more subscription options.

Deploying on the private blockchain network 3 a smart contract generating such a subscription activation transaction, may be accomplished in any feasible manner, such as by any party and/or node on the private network 3, for instance via the exemplifying subscription-bundling node(s) 6 and/or service provider node(s) 5. The smart contract may be represented by any feasible one or more smart contracts configured to generate a subscription activation transaction comprising data indicative of the unique address and comprising and/or pointing to the at least first subscription option. Moreover, generating of a subscription activation transaction may occur at any arbitrary feasible time instant following the previous identifying of data indicative of that said public key had been included in minting of an NFT on the public blockchain 7, such as essentially instantly thereafter, a predeterminable time thereafter and/or when circumstances - e.g. compute resources - so allow. According to an example, "deploying [..] a smart contract generating a subscription activation transaction" may refer to "generating [...] with support from a smart contract a subscription activation transaction", whereas "subscription activation transaction" may refer to "subscription activation record, entry and/or data" and/ or merely "transaction".

As illustrated in an exemplifying manner in exemplifying Figs. 1 and 2, the subscription management system 1 is further - e.g. by means of a **subscription transaction adding unit 109** - adapted and/or configured for deploying a smart contract adding the subscription activation transaction to the private blockchain 3, which addition whitelists activation of the ADS feature set of the at least first subscription option. Thereby, the subscription activation transaction is logged to the private blockchain network 3 - e.g. following consensus of the subscription activation transaction being reached on said network 3 - whereby information of the unique address and further of the subscription option(s) is made available on and/or via the private network 3, subsequently providing approval rights for activation and/or handling of ADS features set(s) of said subscription option(s). Accordingly, by the subscription activation transaction with support from one or more smart contracts being added to the network 3 - for instance provided that content of the subscription activation transaction is found to comply with requirements and/or conditions stipulated in said smart contract(s) - the unique address - or an owner thereof or of the NFT associated therewith - is thus enabled activation of one or more ADS features covered by the one or more subscription options identifiable in the subscription activation transaction. This in turn may enable for and/or support subsequent interaction on the private blockchain 3 between the user 4 - and/or the owner of the unique address - and an ADS-equipped vehicle 2 on the private blockchain network 3 supporting the ADS features covered by the at least first subscription option, for activation and/or handling of the at least first subscription option and/or the ADS feature set associated therewith, such as without further involvement of e.g. the ADS feature provider and/or subscriptions bundling provider e.g. the OEM.

In other words, with the approach and/or setup introduced herein, private data related to e.g. internal workings of available and/or supported ADS features, potential validation information, detailed subscription information and/or business intelligence etc., may be handled on a private blockchain 3 - e.g. between participants such as an ADS feature provider and subscriptions bundling provider e.g. OEM - while at the same time subscriptions of ADS features may be handled on an NFT-supporting public blockchain network 7 providing the ability of minting subscriptions as NFTs. Thereby, privacy requirements and/or needs may be met while at the same time subscription handling may be offered in, to and/or at a public community and/or market place of an NFT-supporting network 7. For instance, ownership of subscriptions may be handled via a public domain 7, while e.g. configuration and/or status thereof may be handled via a private domain 3. Thus, with the introduced concept involving community-based subscription management and providing an approach for connecting both private and public domains 3, 7 as discussed herein, toggling of ADS features may be supported and/or enabled in an efficient and/or improved manner.

The smart contract(s) adding the subscription activation transaction to the private blockchain 3 - and which e.g. may be activated upon the subscription activation transaction being sent and/or provided as input thereto - may be configured in any feasible manner for adding the subscription activation transaction to the private blockchain 3 and whitelisting activation of the ADS feature set of the at least first subscription option.

Potentially, the whitelisting of activation of the ADS feature set of the at least first subscription option, may be supplemented by whitelisting of monetary transfer associated with the at least first subscription option. Furthermore, potential subsequent activation of the ADS feature set of the at least first subscription option, may be achieved in any feasible manner, such as e.g. described in European patent application EP 21 201 973.1, by the same inventor and applicant. According to an example, "deploying [..] a smart contract adding the subscription activation transaction to the private blockchain" may refer to "adding [...] with support from a smart contract the subscription activation transaction to the private blockchain", whereas "the addition whitelisting activation of the ADS feature set of the at least first subscription option" may refer to "the smart contract whitelisting activation of the ADS feature set of the at least first subscription option" and/or "the addition providing, rendering and/or giving approval rights to said unique address for activation of the ADS feature set of the at least first subscription option" and according to an example further to "the addition whitelisting activation of the ADS feature set of the at least first subscription option and further whitelisting monetary transfer associated with the at least first subscription option".

As further shown in Fig. 2, the subscription management system 1 comprises an optional ADS features defining unit 101, a user eligibility identifying unit 102, an optional eligibility transaction generating unit 103, an optional eligibility transaction adding unit 104, a whitelist transaction generating unit 105, a whitelist transaction adding unit 106, an NFT identifying unit 107, a subscription transaction generating unit 108 and a subscription transaction adding unit 109, all of which already have been described in greater detail above. Furthermore, the embodiments herein for provision of a subscription service for ADS features, may be implemented through one or more processors, such as **processor 110,** for instance represented by one or more Central Processing Units, CPUs, and/or one or more Graphics Processing Units, GPUs, together with computer program code for performing the functions and actions of the embodiments herein. Said program code may also be provided as one or more computer program products, for instance in the form of one or more data carriers carrying computer program code for performing the embodiments herein when being loaded into subscription management system 1. One such carrier may be in the form of a CD/DVD ROM disc and/or a hard drive, it is however feasible with other data carriers. The computer program code may furthermore be provided as pure program code on a server and downloaded to the subscription management system 1. The subscription management system 1 may further comprise one or more **memories 111** comprising one or more memory units. The one or more memories 111 optionally includes high-speed random access memory, such as DRAM, SRAM, DDR RAM, or other random access solid-state memory devices, and further optionally include non-volatile memory, such as one or more magnetic disk storage devices, optical disk storage devices, flash memory devices, or other non-volatile solid-state storage devices. Moreover, the one or more memories 111 may be arranged to be used to store e.g. information, and further to store data, configurations, scheduling, and applications, to perform the methods herein when being executed in the subscription management system 1. For instance, the computer program code may be implemented in the firmware, stored in one or more FLASH memories 111, of one or more embedded processors 110, and/or downloaded wirelessly e.g. from an off-board server. Furthermore, the units 101-109 described above, the optional processor(s) 110 and/or the optional one or more memories 111, may at least partly be comprised in one or more nodes 31 on the private and/or public networks 3, 7, such as at least in at least a first service provider node 5, subscription-bunding node 6 and/or computational node. Those skilled in the art will also appreciate that said units 101-109 described above as well as any other unit, interface, system, controller, module, device, element, feature, or the like described herein may refer to, comprise, include, and/or be implemented in or by a combination of analog and digital circuits, and/or one or more processors configured with software and/or firmware, e.g. stored in one or more memories such as the one or more memories 111, that when executed by the one or more processors such as the processor(s) 110 perform as described herein. One or more of these processors, as well as the other digital hardware, may be included in a single Application-Specific Integrated Circuitry, ASIC, or several processors and various digital hardware may be distributed among several separate components, whether individually packaged or assembled into a System-on-a-Chip, SoC.

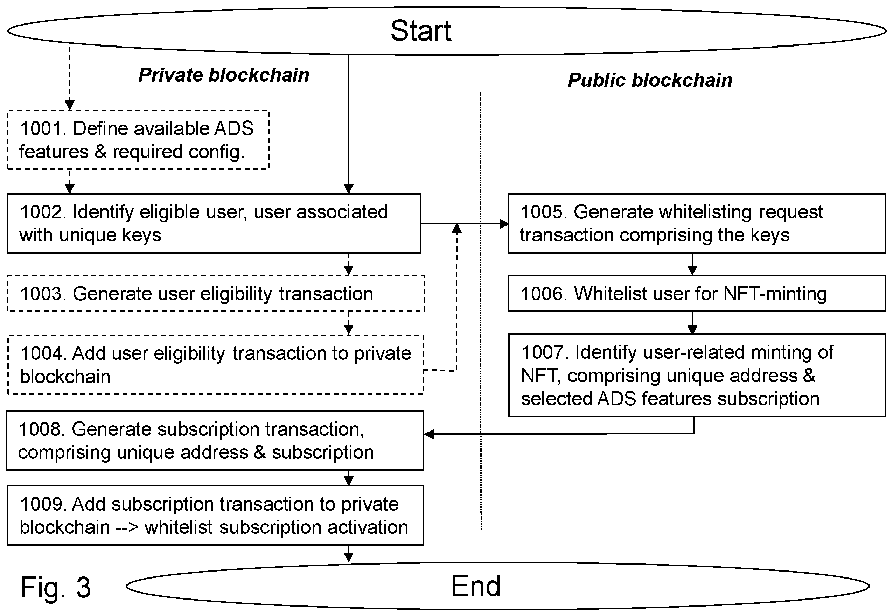

**Fig. 3** is a flowchart depicting an exemplifying method performed by a subscription handling system 1 according to embodiments of the disclosure. Said method is for provision of a subscription service for ADS features. The exemplifying method, which may be continuously repeated, comprises one or more of the following actions discussed with support from Figs. 1-2. Moreover, the actions may be taken in any suitable order and/or one or more actions may be performed simultaneously and/or in alternate order where applicable. For instance, Action 1005 and optional Actions 1003 and 1004 may be performed essentially simultaneously and/or in alternate order.

### Action 1002

In Action 1002, the subscription management system 1 deploys - e.g. with support from the user eligibility identifying unit 102 - on a private blockchain network 3 comprising a set of nodes 31, a smart contract identifying data indicative of a user 4 being eligible for one or more subscription options representing various ADS feature sets, the user-indicative data comprising a respective unique private key 41 and public key 42 personal to the user 4.

Optionally, said set of nodes 31 may comprise at least a service provider node 5 dedicated to an ADS feature provider and/or a subscriptions-bundling node 6 dedicated to a subscriptions bundling provider, such as an OEM.

Further optionally, said user 4 may be associated with an ADS-equipped vehicle 2 connected to the private blockchain network 3.

### Action 1001

In optional Action 1001, which potentially may precede Action 10002, the subscription management system 1 may deploy - e.g. with support from the optional ADS features defining unit 101 - a smart contract on the private blockchain network 3, defining available ADS features and corresponding required ADS-related vehicle configurations.

### Action 1003

In optional Action 1003, the subscription management system 1 may deploy - e.g. with support from the optional eligibility transaction generating unit 103 - on the private blockchain network 3, a smart contract generating a user eligibility transaction comprising data indicative of the unique private and public keys 41, 42.

### Action 1004

In optional Action 1004, which may follow upon Action 1003, the subscription management system 1 may deploy - e.g. with support from the optional eligibility transaction adding unit 104 - a smart contract adding the user eligibility transaction to the private blockchain 3, the addition whitelisting the user 4 for monetary transfer(s) of tokens on the private blockchain 3 for ADS feature set(s) activation.

### Action 1005

In Action 1005, the subscription management system 1 deploys - e.g. with support from the whitelist transaction generating unit 105 - on a public blockchain network 7 supporting minting of Non-fungible tokens, NFTs, and for instance comprising at least one of the set of nodes 31, a smart contract generating a whitelisting request transaction comprising the unique private and public keys 41, 42.

### Action 1006

In Action 1006, the subscription management system 1 deploys - e.g. with support from the whitelist transaction adding unit 106 - a smart contract adding the whitelisting request transaction to the public blockchain 7, the addition whitelisting the unique public key 42 for minting of NFTs on the public blockchain network 7.

### Action 1007

In Action 1007, the subscription management system 1 deploys - e.g. with support from the NFT identifying unit 107 - on the public blockchain network 7, a smart contract identifying data indicative of the public key 42 having been included in minting of an NFT on the public blockchain 7, said NFT comprising and/or pointing to data indicative of an at least first subscription option out of the one or more subscription options and further comprising a unique address associated with the user 4 derived from the unique public key 42.

Optionally, Action 1007 may comprise the one or more subscription options and corresponding required ADS-related vehicle configurations being derivable from a smart contract deployed on the public blockchain network 7.

### Action 1008

In Action 1008, the subscription management system 1 deploys - e.g. with support from the subscription transaction generating unit 108 - on the private blockchain network 3, a smart contract generating a subscription activation transaction comprising data indicative of the unique address and comprising and/or pointing to the at least first subscription option.

### Action 1009

In Action 1009, the subscription management system 1 deploys - e.g. with support from the subscription transaction adding unit 109 - a smart contract adding the subscription activation transaction to the private blockchain 3, the addition whitelisting activation of the ADS feature set of the at least first subscription option

According to an example, the approach introduced herein may be exemplified as data being distributed between - on one hand - community management and subscription NFTs on the public blockchain 7 - and on the other hand - vehicle APIs and potentially payment rails on the private blockchain 3. Respective public and private blockchains 3, 7 may be used to manage ADS feature subscriptions, and further, the same keys 41, 42 may be used on both blockchains 3, 7. The private domain 3 may further support KYC - i.e. "know your customer/client" - and/or fiat payments, and private data be kept outside the public blockchain 7. Potential KYC information may be hashed to void security issues. Moreover, the setup may support both static and dynamic NFTs for subscriptions, which may be relevant in consideration of OEM impact of bundling.

According to a further example, the approach introduced herein may further additionally or alternatively be exemplified by an ADS feature provider storing - e.g. coding - into a smart contract in the private domain 3, which ADS features that may be toggled, API(s) and potentially further cost models. The address thereof may e.g. be stored in embedded software for queries. An OEM - e.g. subscriptions bundling provider - may then provide a public address of a user 4 to the ADS feature provider, who may then whitelist the user's 4 public address - which is used in both the public and private networks 7, 3 - for subscription minting. The OEM may further provide fiat payment data information to the ADS feature provider, who may connect this to the user's 4 wallet in the private domain 3. The whitelisting of the user 4 may be submitted e.g. by the ADS feature provider to the public contract together with details about the subscription e.g. defined according to OEM specification (bundling, costs, whitelist). The user 4 may then mint a subscription on the public blockchain 7, for instance either a dynamic NFT that may be reused or a static NFT for one-time subscription. Furthermore, details of the subscription may potentially be stored both centralized and distributed to support cases where bundling needs to be updated. The public mint may emit an event that is taken onto on the private blockchain 3 and the subscription may be recreated in that domain 3. This may trigger transfer of a subscription fee on the private blockchain 3 from the user's 4 wallet to the ADS feature provider's wallet, which further may be mirrored by a fiat transaction. A vehicle 2 may then sign the subscription check transaction with the user's 4 public key 42 and provide the vehicle's 2 key. The subscription status may be checked in a smart contract, which may include vehicle configuration and details of what features are included and the reply to the vehicle 2 may include that information. Subscription may be linked to OEM bundle, OEM bundle linked to ADS feature sets. The features may then be active in the vehicle 2 according to the reply.

According to a yet further example, the approach introduced herein may further additionally or alternatively be exemplified by an ADS service provider and OEM collaborating in a private blockchain 3, with each party having their validators on the private blockchain 3. The private blockchain 3 may potentially be storing information related to the ADS service provider and/or ADS features provided therefrom, and not necessarily OEM information. Moreover, in the private blockchain 3, vehicles 2 may be participants and have their own wallets. Furthermore, the ADS feature provider may configure possible ADS feature settings e.g. in a smart contract on the private blockchain 3 including vehicle requirements etc. When a user 4 then e.g. buys a vehicle 2 from the OEM, the user 4 may sign up and register for subscription service and e.g. submit his or her public key 42 on the public blockchain 7, or e.g. receive one from the ADS feature provider. As the user 4 e.g. buys the vehicle 2 and registers his or her wallet, the same wallet may be created in the private blockchain, which may tie the user's 4 wallet to his or her credit card for payments in the private domain 3. The OEM may bundle the ADS feature provider's configuration into subscription options for their OEM, and this information may be coded onto the private blockchain e.g. in a subcontract or as a configuration to the ADS feature provider's configuration contract. The OEM may further set up the NFTs for minting in the public blockchain 7. Payload for the NFT may be both distributed - for e.g. for static meta data such as image - and centralized e.g. for dynamic subscription data such as payment status. The registration of the user's 4 wallet may also whitelist the user's 4 public wallet for subscription minting in the public blockchain 7. When the user 4 then mints a subscription in the public blockchain 7, this may trigger a minting of a subscription to the user 4 on the private blockchain. The private subscription may be done in a smart contract - e.g. provided by the ADS feature provider - and may translate the OEM bundling to ADS features configuration. The subscription may be noted to be paid for by the user's 4 wallet, and a financial transaction may be done e.g. using the user's 4 credit card and may be transacted on-chain on the private blockchain 3 e.g. through a smart contract to divert the payment to the right receivers. Notably, ownership of the subscription may be managed by the public blockchain 7 while the configuration and status of the subscription may be managed by the private blockchain 3. Then, when the user 4 potentially e.g. sits in a - e.g. his or her - vehicle 2, the user 4 may use the NFT on the public blockchain to prove that he or she is the owner of the specific subscription on the private blockchain 3. This verification may trigger a transaction from the vehicle 2, with said vehicle's 2 wallet, that may be executed on the private blockchain 3 to verify the subscription and vehicle configuration and ability to enable the ADS features. As the user 4 potentially uses the ADS features, certain information regarding use and status may be stored on the private blockchain signed with the vehicle's 2 wallet.

The person skilled in the art realizes that the present disclosure by no means is limited to the preferred embodiments described above. On the contrary, many modifications and variations are possible within the scope of the appended claims. It should furthermore be noted that the drawings not necessarily are to scale and the dimensions of certain features may have been exaggerated for the sake of clarity. Emphasis is instead placed upon illustrating the principle of the embodiments herein. Additionally, in the claims, the word "comprising" does not exclude other elements or steps, and the indefinite article "a" or "an" does not exclude a plurality.

## Claims

1. A method performed by a subscription management system (1) for provision of a subscription service for automated driving system, ADS (21), features, said method comprising:
***deploying*** (1002) on a private blockchain network (3) comprising a set of nodes (31), a smart contract identifying data indicative of a user (4) being eligible for one or more subscription options representing various ADS feature sets, the user-indicative data comprising a respective unique private key (41) and public key (42) personal to said user (4);
***deploying*** (1005) on a public blockchain network (7) supporting minting of Non-fungible tokens, NFTs, and comprising at least one of said set of nodes (31), a smart contract generating a whitelisting request transaction comprising said unique private and public keys (41, 42);
***deploying*** (1006) a smart contract adding the whitelisting request transaction to said public blockchain (7), the addition whitelisting said unique public key (42) for minting of NFTs on said public blockchain network (7);
***deploying*** (1007) on said public blockchain network (7), a smart contract identifying data indicative of said public key (42) having been included in minting of an NFT on the public blockchain, said NFT comprising and/or pointing to data indicative of an at least first subscription option out of said one or more subscription options and further comprising a unique address associated with the user (4) derived from said unique public key (42);
***deploying*** (1008) on said private blockchain network (3), a smart contract generating a subscription activation transaction comprising data indicative of said unique address and comprising and/or pointing to said at least first subscription option; and
***deploying*** (1009) a smart contract adding the subscription activation transaction to said private blockchain (3), the addition whitelisting activation of the ADS feature set of said at least first subscription option.

2. The method according to claim 1, wherein said set of nodes (31) comprises at least a service provider node (5) dedicated to an ADS feature provider and/or a subscriptions-bundling node (6) dedicated to a subscriptions bundling provider.

3. The method according to claim 1 or 2, wherein said user (4) is associated with an ADS-equipped vehicle (21) connected to said private blockchain network (3).

4. The method according to any one of claims 1-3, wherein said ***deploying*** (1007) on said public blockchain network (7) a smart contract identifying data indicative of said public key having been included in minting of an NFT comprising and/or pointing to data indicative of an at least first subscription option out of said one or more subscription options, comprises said one or more subscription options and corresponding required ADS-related vehicle configurations being derivable from a smart contract deployed on the public blockchain network (7).

5. The method according to any one of claims 1-4, further comprising:
***deploying*** (1001) a smart contract on said private blockchain network (3), defining available ADS features and corresponding required ADS-related vehicle configurations.

6. The method according to any one of claims 1-5, further comprising:
***deploying*** (1003) on said private blockchain network (3), a smart contract generating a user eligibility transaction comprising data indicative of the unique private and public keys (41, 42); and
***deploying*** (1004) a smart contract adding the user eligibility transaction to said private blockchain (3), the addition whitelisting said user (4) for monetary transfer(s) of tokens on said private blockchain (3) for ADS feature set(s) activation.

7. A **subscription management system** (1) for provision of a subscription service for automated driving system, ADS (21), features, said subscription management system (1) comprising:
a **user eligibility identifying unit** (102) for ***deploying*** (1002) on a private blockchain network (3) comprising a set of nodes (31), a smart contract identifying data indicative of a user (4) being eligible for one or more subscription options representing various ADS feature sets, the user-indicative data comprising a respective unique private key (41) and public key (42) personal to said user (4);
a **whitelist transaction generating unit** (105) for ***deploying*** (1005) on a public blockchain network (7) supporting minting of Non-fungible tokens, NFTs, and comprising at least one of said set of nodes (31), a smart contract generating a whitelisting request transaction comprising said unique private and public keys (41, 42);
a **whitelist transaction adding unit** (106) for ***deploying*** (1006) a smart contract adding the whitelisting request transaction to said public blockchain (7), the addition whitelisting said unique public key (42) for minting of NFTs on said public blockchain network (7);
an **NFT identifying unit** (107) for ***deploying*** (1007) on said public blockchain network (7), a smart contract identifying data indicative of said public key (42) having been included in minting of an NFT on the public blockchain, said NFT comprising and/or pointing to data indicative of an at least first subscription option out of said one or more subscription options and further comprising a unique address associated with the user (4) derived from said unique public key (42);
a **subscription transaction generating unit** (108) for ***deploying*** (1008) on said private blockchain network (3), a smart contract generating a subscription activation transaction comprising data indicative of said unique address and comprising and/or pointing to said at least first subscription option; and
a **subscription transaction adding unit** (109) for ***deploying*** (1009) a smart contract adding the subscription activation transaction to said private blockchain (3), the addition whitelisting activation of the ADS feature set of said at least first subscription option.

8. The subscription management system (1) according to claim 7, wherein said set of nodes (31) comprises at least a service provider node (5) dedicated to an ADS feature provider and/or a subscriptions-bundling node (6) dedicated to a subscriptions bundling provider.

9. The subscription management system (1) according to claim 7 or 8, wherein said user (4) is associated with an ADS-equipped vehicle (21) connected to said private blockchain network (3).

10. The subscription management system (1) according to any one of claims 7-9,
wherein said one or more subscription options and corresponding required ADS-related vehicle configurations are derivable from a smart contract deployed on the public blockchain network (7).

11. The subscription management system (1) according to any one of claims 7-10, further comprising:
an **ADS features defining unit** (101) for ***deploying*** (1001) a smart contract on said private blockchain network (3), defining available ADS features and corresponding required ADS-related vehicle configurations.

12. The subscription management system (1) according to any one of claims 7-11, further comprising:
an **eligibility transaction generating unit** (103) for ***deploying*** (1003) on said private blockchain network (3), a smart contract generating a user eligibility transaction comprising data indicative of the unique private and public keys (41, 42); and
an **eligibility transaction adding unit** (104) for ***deploying*** (1004) a smart contract adding the user eligibility transaction to said private blockchain (3), the addition whitelisting said user (4) for monetary transfer(s) of tokens on said private blockchain (3) for ADS feature set(s) activation.

13. At least a first node (31) comprising a subscription management system (1) according to any one of claims 7-12.

14. A computer program product comprising a computer program containing computer program code means arranged to cause a computer or a processor to execute the steps of a method according to any of claims 1-6, stored on a computer-readable medium or a carrier wave.

15. A non-volatile computer readable storage medium having stored thereon the computer program product of claim 14.

## Patentansprüche

1. Verfahren, das durch ein Abonnementverwaltungssystem (1) zur Vorhaltung eines Abonnementdiensts für automatisierte Fahrsystem, ADS (21), -Merkmale durchgeführt wird, das Verfahren umfassend:
***Bereitstellen*** (1002), auf einem privaten Blockchain-Netzwerk (3) das einen Satz von Knoten (31) umfasst, eines intelligenten Vertrags, der Daten identifiziert, die angeben, dass ein Benutzer (4) zu einer oder mehreren Abonnementoptionen berechtigt ist, die verschiedene ADS-Merkmalssätze darstellen, wobei die benutzerangebenden Daten einen jeweiligen eindeutigen privaten Schlüssel (41) und einen eindeutigen öffentlichen Schlüssel (42) umfassen, die für den Benutzer (4) persönlich sind;
***Bereitstellen*** (1005), auf einem öffentlichen Blockchain-Netzwerk (7), eines intelligenten Vertrags, der eine Whitelisting-Anforderungstransaktion erzeugt, die den eindeutigen privaten und den eindeutigen öffentlichen Schlüssel (41, 42) umfasst, das ein Prägen von nicht fungiblen Token, NFTs, unterstützt und mindestens einen des Satzes von Knoten (31) umfasst;
***Bereitstellen*** (1006) eines intelligenten Vertrags, der die Whitelisting-Anforderungstransaktion zu der öffentlichen Blockchain (7) hinzufügt, wobei die Hinzufügung den eindeutigen öffentlichen Schlüssel (42) zum Prägen von NFTs auf dem öffentlichen Blockchain-Netzwerk (7) whitelistet;
***Bereitstellen*** (1007), auf dem öffentlichen Blockchain-Netzwerk (7), eines intelligenten Vertrags, der Daten identifiziert, , die angeben dass der öffentliche Schlüssel (42) in das Prägen eines NFT auf der öffentlichen Blockchain eingeschlossen wurde, wobei das NFT Daten umfasst und/oder auf diese verweist, die mindestens eine erste Abonnementoption aus der einen oder den mehreren Abonnementoptionen angeben, und weiter umfassend eine eindeutige Adresse, die dem Benutzer (4) zugeordnet ist, die aus dem eindeutigen öffentlichen Schlüssel (42) abgeleitet ist;
***Bereitstellen*** (1008), auf dem privaten Blockchain-Netzwerk (3), eines intelligenten Vertrags der eine Abonnementaktivierungstransaktion erzeugt, die Daten umfasst, die die eindeutige Adresse angeben, und die mindestens die erste Abonnementoption umfasst und/oder auf diese verweist;
und Bereitstellen (1009) eines intelligenten Vertrags, der die Abonnementaktivierungstransaktion zu der privaten Blockchain (3) hinzufügt, wobei die Hinzufügung eine Aktivierung des ADS-Merkmalssatzes der mindestens ersten Abonnementoption whitelistet.

2. Verfahren nach Anspruch 1, wobei der Satz von Knoten (31) mindestens einen Dienstanbieterknoten (5), der einem ADS-Merkmalsanbieter gewidmet ist, und/oder einen Abonnementbündelungsknoten (6), der einem Abonnementbündelungsanbieter gewidmet ist, umfasst.

3. Verfahren nach Anspruch 1 oder 2, wobei der Benutzer (4) einem mit ADS ausgestatteten Fahrzeug (21) zugeordnet ist, das mit dem privaten Blockchain-Netzwerk (3) verbunden ist.

4. Verfahren nach einem der Ansprüche 1-3, wobei das *Bereitstellen* (1007), auf dem öffentlichen Blockchain-Netzwerk (7), eines intelligenten Vertrags, der Daten identifiziert die angeben, dass der öffentliche Schlüssel in das Prägen eines NFT eingeschlossen wurde, das Daten umfasst und/oder auf diese verweist, die mindestens eine erste Abonnementoption aus der einen oder den mehreren Abonnementoptionen angeben, umfasst, dass die eine oder mehreren Abonnementoptionen und entsprechende erforderliche ADS-bezogene Fahrzeugkonfigurationen aus einem intelligenten Vertrag ableitbar sind, der auf dem öffentlichen Blockchain-Netzwerk (7) bereitgestellt ist.

5. Verfahren nach einem der Ansprüche 1-4, weiter umfassend:
***Bereitstellen*** (1001) eines intelligenten Vertrags auf dem privaten Blockchain-Netzwerk (3), der verfügbare ADS-Merkmale und entsprechende erforderliche ADS-bezogene Fahrzeugkonfigurationen definiert.

6. Verfahren nach einem der Ansprüche 1-5, weiter umfassend:
***Bereitstellen*** (1003), auf dem privaten Blockchain-Netzwerk (3), eines intelligenten Vertrags, der eine Benutzerberechtigungstransaktion erzeugt, die Daten umfasst, die den eindeutigen privaten und den eindeutigen öffentlichen Schlüssel (41, 42) angeben; und
***Bereitstellen*** (1004) eines intelligenten Vertrags, der die Benutzerberechtigungstransaktion zu der privaten Blockchain (3) hinzufügt, wobei die Hinzufügung den Benutzer (4) für (einen) Geldtransfer(s) von Tokens auf der privaten Blockchain (3) zur Aktivierung eines/von ADS-Merkmalssatzes/-sätzen whitelistet.

7. **Abonnementverwaltungssystem** (1) zur Vorhaltung eines Abonnementdiensts
für automatisierte Fahrsystem, ADS (21), -Merkmale, das Abonnementverwaltungssystem (1) umfassend:
eine **Benutzerberechtigungsidentifizierungseinheit** (102) zum ***Bereitstellen*** (1002), auf einem privaten Blockchain-Netzwerk (3) das einen Satz von Knoten (31) umfasst, eines intelligenten Vertrags, der Daten identifiziert, die angeben, dass ein Benutzer (4) zu einer oder mehreren Abonnementoptionen berechtigt ist, die verschiedene ADS-Merkmalssätze darstellen, wobei die benutzerangebenden Daten einen jeweiligen eindeutigen privaten Schlüssel (41) und einen eindeutigen öffentlichen Schlüssel (42) umfassen, die für den Benutzer (4) persönlich sind;
eine **Whitelist-Transaktionserzeugungseinheit** (105) zum ***Bereitstellen*** (1005), auf einem öffentlichen Blockchain-Netzwerk (7), das ein Prägen von nicht fungiblen Token, NFTs, unterstützt, und mindestens einen des Satzes von Knoten (31) umfasst, eines intelligenten Vertrags, der eine Whitelisting-Anforderungstransaktion erzeugt, die den eindeutigen privaten und öffentlichen Schlüssel (41, 42) umfasst;
eine **Whitelist-Transaktionshinzufügungseinheit** (106) zum ***Bereitstellen*** (1006) eines intelligenten Vertrags, der die Whitelist-Anforderungstransaktion zu der öffentlichen Blockchain (7) hinzufügt, wobei die Hinzufügung den eindeutigen öffentlichen Schlüssel (42) zum Prägen von NFTs auf dem öffentlichen Blockchain-Netzwerk (7) whitelistet;
eine **NFT-Identifizierungseinheit** (107) zum ***Bereitstellen*** (1007), auf dem öffentlichen Blockchain-Netzwerk (7), eines intelligenten Vertrags der Daten identifiziert, die angeben, dass der öffentliche Schlüssel (42) in das Prägen eines NFT auf der öffentlichen Blockchain eingeschlossen wurde, wobei das NFT Daten umfasst und/oder auf diese verweist, die mindestens eine erste Abonnementoption aus der einen oder den mehreren Abonnementoptionen angeben, und weiter umfassend eine eindeutige Adresse, die dem Benutzer (4) zugeordnet ist, die aus dem eindeutigen öffentlichen Schlüssel (42) abgeleitet ist;
eine **Abonnementtransaktionserzeugungseinheit** (108) zum ***Bereitstellen*** (1008), auf dem privaten Blockchain-Netzwerk (3), eines intelligenten Vertrags , der eine Abonnementaktivierungstransaktion erzeugt, die Daten umfasst, die die eindeutige Adresse angeben, und die mindestens die erste Abonnementoption umfasst und/oder auf diese verweist; und
eine **Abonnementtransaktionshinzufügungseinheit** (109) zum ***Bereitstellen*** (1009) eines intelligenten Vertrags, der die Abonnementaktivierungstransaktion zu der privaten Blockchain (3) hinzufügt, wobei die Hinzufügung eine Aktivierung des ADS-Merkmalssatzes der mindestens ersten Abonnementoption whitelistet.

8. Abonnementverwaltungssystem (1) nach Anspruch 7, wobei der Satz von Knoten (31) mindestens einen Dienstanbieterknoten (5), der einem ADS-Merkmalsanbieter gewidmet ist, und/oder einen Abonnementbündelungsknoten (6), der einem Abonnementbündelungsanbieter gewidmet ist, umfasst.

9. Abonnementverwaltungssystem (1) nach Anspruch 7 oder 8, wobei der Benutzer (4) einem mit ADS ausgestatteten Fahrzeug (21) zugeordnet ist, das mit dem privaten Blockchain-Netzwerk (3) verbunden ist.

10. Abonnementverwaltungssystem (1) nach einem der Ansprüche 7-9, wobei die eine oder mehreren Abonnementoptionen und entsprechende erforderliche ADS-bezogene Fahrzeugkonfigurationen aus einem intelligenten Vertrag ableitbar sind, der auf dem öffentlichen Blockchain-Netzwerk (7) bereitgestellt ist.

11. Abonnementverwaltungssystem (1) nach einem der Ansprüche 7-10, weiter umfassend:
eine **ADS-Merkmalsdefinitionseinheit** (101) zum ***Bereitstellen*** (1001) eines intelligenten Vertrags auf dem privaten Blockchain-Netzwerk (3), der verfügbare ADS-Merkmale und entsprechende erforderliche ADS-bezogene Fahrzeugkonfigurationen definiert.

12. Abonnementverwaltungssystem (1) nach einem der Ansprüche 7-11,
weiter umfassend:
eine **Berechtigungstransaktionserzeugungseinheit** (103) zum ***Bereitstellen*** (1003), auf dem privaten Blockchain-Netzwerk (3), eines intelligenten Vertrags, der eine Benutzerberechtigungstransaktion erzeugt, die Daten umfasst, die den eindeutigen privaten und den eindeutigen öffentlichen Schlüssel (41, 42) angeben; und
eine **Berechtigungstransaktionshinzufügungseinheit** (104) zum ***Bereitstellen*** (1004) eines intelligenten Vertrags, der die Benutzerberechtigungstransaktion zu der privaten Blockchain (3) hinzufügt, wobei die Hinzufügung den Benutzer (4) für (einen) Geldtransfer(s) von Token auf der privaten Blockchain (3) zur Aktivierung eines/von ADS-Merkmalssatzes/-sätzen whitelistet.

13. Mindestens ein erster **Knoten** (31), umfassend ein Abonnementverwaltungssystem (1) nach einem der Ansprüche 7-12.

14. Computerprogrammprodukt, umfassend ein Computerprogramm, das Computerprogrammcodemittel enthält, die eingerichtet sind, um einen Computer oder einen Prozessor zu veranlassen, die Schritte eines Verfahrens nach einem der Ansprüche 1-6 auszuführen, gespeichert auf einem computerlesbaren Medium oder einer Trägerwelle.

15. Nichtflüchtiges, computerlesbares Speichermedium, auf dem das Computerprogrammprodukt nach Anspruch 14 gespeichert ist.

## Revendications

1. Procédé mis en œuvre par un système de gestion d'abonnement (1) pour la fourniture d'un service d'abonnement à des fonctionnalités de système de conduite automatisée, ADS (21), ledit procédé comprenant :
***le déploiement*** (1002), sur un réseau de chaîne de blocs privée (3) comprenant un ensemble de nœuds (31), d'un contrat intelligent identifiant des données d'indication d'un utilisateur (4) qui est éligible à une ou plusieurs options d'abonnement représentant divers ensembles de fonctionnalités ADS, les données d'indication d'utilisateur comprenant une clé privée (41) et une clé publique (42) uniques respectives personnelles audit utilisateur (4) ;
***le déploiement*** (1005), sur un réseau de chaîne de blocs publique (7) prenant en charge la frappe de jetons non fongibles, NFT, et comprenant au moins l'un parmi ledit ensemble de nœuds (31), d'un contrat intelligent générant une transaction de demande de mise en liste blanche comprenant lesdites clés privée et publique (41, 42) uniques ;
***le déploiement*** (1006) d'un contrat intelligent en ajoutant la transaction de demande de mise en liste blanche à ladite chaîne de blocs publique (7), l'ajout mettant en liste blanche ladite clé publique (42) unique pour la frappe de NFT sur ledit réseau de chaîne de blocs publique (7) ;
***le déploiement*** (1007), sur ledit réseau de chaîne de blocs publique (7), d'un contrat intelligent identifiant des données indiquant que ladite clé publique (42) a été incluse dans la frappe d'un NFT sur la chaîne de blocs publique, ledit NFT comprenant et/ou pointant vers des données indiquant au moins une première option d'abonnement parmi lesdites une ou plusieurs options d'abonnement et comprenant en outre une adresse unique associée à l'utilisateur (4) dérivée de ladite clé publique (42) unique ;
***le déploiement*** (1008), sur ledit réseau de chaîne de blocs privée (3), d'un contrat intelligent générant une transaction d'activation d'abonnement comprenant des données indiquant ladite adresse unique et comprenant et/ou pointant vers ladite au moins une première option d'abonnement ; et
***le déploiement*** (1009) d'un contrat intelligent en ajoutant la transaction d'activation d'abonnement vers ladite chaîne de blocs privée (3), l'ajout mettant en liste blanche l'activation de l'ensemble de fonctionnalités ADS de ladite au moins une première option d'abonnement.

2. Procédé selon la revendication 1, dans lequel ledit ensemble de nœuds (31) comprend au moins un nœud fournisseur de service (5) dédié à un fournisseur de fonctionnalités ADS et/ou un nœud de groupage d'abonnements (6) dédié à un fournisseur de groupage d'abonnements.

3. Procédé selon la revendication 1 ou 2, dans lequel ledit utilisateur (4) est associé à un véhicule équipé d'un ADS (21) connecté audit réseau de chaîne de blocs privée (3).

4. Procédé selon l'une quelconque des revendications 1 à 3, dans lequel ledit ***déploiement*** (1007), sur ledit réseau de chaîne de blocs publique (7), d'un contrat intelligent identifiant des données indiquant que ladite clé publique a été incluse dans la frappe d'un NFT comprenant et/ou pointant vers des données indiquant au moins une première option d'abonnement parmi lesdites une ou plusieurs options d'abonnement, comprend lesdites une ou plusieurs options d'abonnement et des configurations de véhicule associées à l'ADS requises correspondantes pouvant être dérivées d'un contrat intelligent déployé sur le réseau de chaîne de blocs publique (7).

5. Procédé selon l'une quelconque des revendications 1 à 4, comprenant en outre :
***le déploiement*** (1001) d'un contrat intelligent sur ledit réseau de chaîne de blocs privée (3), définissant des fonctionnalités ADS disponibles et des configurations de véhicule associées à l'ADS requises correspondantes.

6. Procédé selon l'une quelconque des revendications 1 à 5, comprenant en outre :
***le déploiement*** (1003) sur ledit réseau de chaîne de blocs privée (3), d'un contrat intelligent générant une transaction d'éligibilité d'utilisateur comprenant des données indiquant les clés privée et publique (41, 42) uniques ; et
***le déploiement*** (1004) d'un contrat intelligent ajoutant la transaction d'éligibilité d'utilisateur à ladite chaîne de blocs privée (3), l'ajout mettant en liste blanche ledit utilisateur (4) pour un ou plusieurs transferts monétaires de jetons sur ladite chaîne de blocs privée (3) pour l'activation d'un ou plusieurs ensembles de fonctionnalités ADS.

7. **Système de gestion d'abonnement** (1) pour la fourniture d'un service d'abonnement
à des fonctionnalités de système de conduite automatisée, ADS (21), ledit système de gestion
d'abonnement (1) comprenant :
une **unité d'identification d'éligibilité d'utilisateur** (102) pour le ***déploiement*** (1002), sur un réseau de chaîne de blocs privée (3) comprenant un ensemble de nœuds (31), d'un contrat intelligent identifiant des données d'indication d'un utilisateur (4) qui est éligible à une ou plusieurs options d'abonnement représentant divers ensembles de fonctionnalités ADS, les données d'indication d'utilisateur comprenant une clé privée (41) et une clé publique (42) uniques respectives personnelles audit utilisateur (4) ;
une **unité de génération de transaction de liste blanche** (105) pour le ***déploiement*** (1005), sur un réseau de chaîne de blocs publique (7) prenant en charge la frappe de jetons non fongibles, NFT, et comprenant au moins l'un parmi ledit ensemble de nœuds (31), d'un contrat intelligent générant une transaction de demande de mise en liste blanche comprenant lesdites clés privée et publique (41, 42) uniques ;
une **unité d'ajout de transaction de liste blanche** (106) pour le ***déploiement*** (1006) d'un contrat intelligent en ajoutant la transaction de demande de mise en liste blanche à ladite chaîne de blocs publique (7), l'ajout mettant en liste blanche ladite clé publique (42) unique pour la frappe de NFT sur ledit réseau de chaîne de blocs publique (7) ;
une **unité d'identification de NFT** (107) pour le ***déploiement*** (1007), sur ledit réseau de chaîne de blocs publique (7), d'un contrat intelligent identifiant des données indiquant que ladite clé publique (42) a été incluse dans la frappe d'un NFT sur la chaîne de blocs publique,
ledit NFT comprenant et/ou pointant vers des données indiquant au moins une première option d'abonnement parmi lesdites une ou plusieurs options d'abonnement et comprenant en outre une adresse unique associée à l'utilisateur (4) dérivée de ladite clé publique (42) unique ;
une unité de **génération de transaction d'abonnement** (108) pour le ***déploiement*** (1008), sur ledit réseau de chaîne de blocs privée (3), d'un contrat intelligent générant une transaction d'activation d'abonnement comprenant des données indiquant ladite adresse unique et comprenant et/ou pointant vers ladite au moins une première option d'abonnement ; et
une **unité d'ajout de transaction d'abonnement** (109) pour le ***déploiement*** (1009) d'un contrat intelligent en ajoutant la transaction d'activation d'abonnement à ladite chaîne de blocs privée (3), l'ajout mettant en liste blanche l'activation de l'ensemble de fonctionnalités ADS de ladite au moins une première option d'abonnement.

8. Système de gestion d'abonnement (1) selon la revendication 7, dans lequel ledit ensemble de nœuds (31) comprend au moins un nœud fournisseur de service (5) dédié à un fournisseur de fonctionnalités ADS et/ou un nœud de groupage d'abonnements (6) dédié à un fournisseur de groupage d'abonnements.

9. Système de gestion d'abonnement (1) selon la revendication 7 ou 8, dans lequel ledit utilisateur (4) est associé à un véhicule équipé d'un ADS (21) connecté audit réseau de chaîne de blocs privée (3).

10. Système de gestion d'abonnement (1) selon l'une quelconque des revendications 7 à 9, dans lequel lesdites une ou plusieurs options d'abonnement et des configurations de véhicule associées à l'ADS requises correspondantes peuvent être dérivées d'un contrat intelligent déployé sur le réseau de chaîne de blocs publique (7).

11. Système de gestion d'abonnement (1) selon l'une quelconque des revendications 7 à 10, comprenant en outre :
une **unité de définition de fonctionnalités ADS** (101) pour le ***déploiement*** (1001) d'un contrat intelligent sur ledit réseau de chaîne de blocs privée (3), définissant des fonctionnalités ADS disponibles et des configurations de véhicule associées à l'ADS requises correspondantes.

12. Système de gestion d'abonnement (1) selon l'une quelconque des revendications 7 à 11, comprenant en outre :
une **unité de génération de transaction d'éligibilité** (103) pour le ***déploiement*** (1003), sur ledit réseau de chaîne de blocs privée (3), d'un contrat intelligent générant une transaction d'éligibilité d'utilisateur comprenant des données indiquant des clés privée et publique (41, 42) uniques ; et
une **unité d'ajout de transaction d'éligibilité** (104) pour le ***déploiement*** (1004) d'un contrat intelligent en ajoutant la transaction d'éligibilité d'utilisateur à ladite chaîne de blocs privée (3), l'ajout mettant en liste blanche ledit utilisateur (4) pour un ou plusieurs transferts monétaires de jetons sur ladite chaîne de blocs privée (3) pour l'activation d'un ou plusieurs ensembles de fonctionnalités ADS.

13. Au moins un premier **nœud** (31) comprenant un système de gestion d'abonnement (1) selon l'une quelconque des revendications 7 à 12.

14. Produit-programme informatique comprenant un programme informatique contenant un moyen de code de programme informatique conçu pour amener un ordinateur ou un processeur à exécuter les étapes d'un procédé selon l'une quelconque des revendications 1 à 6, stocké sur un support lisible par ordinateur ou une onde porteuse.

15. Support de stockage lisible par ordinateur non volatil sur lequel est stocké le produit-programme informatique selon la revendication 14.
